# EUROPEAN PATENT SPECIFICATION

(11) **EP 1 554 425 B1**
(45) Date of publication and mention of the grant of the patent: **17.03.2010**
(21) Application number: 03770743.7
(22) Date of filing: 14.10.2003
(51) Int. Cl.: D06N 7/00, B29B 17/00

(54) **METHOD OF PREPARING CARPET BACKING USING RECYCLED CARPET SCRAP**
VERFAHREN ZUR HERSTELLUNG EINES TEPPICHRÜCKENS AUS TEPPICH-RECYCLAT
PROCEDE DE PREPARATION D'UN DOSSIER DE MOQUETTE AU MOYEN DE RESIDUS DE MOQUETTE RECYCLES

(30) Priority: 15.10.2002 US 418534 P
(43) Date of publication of application: 20.07.2005
(73) Proprietor: DOW GLOBAL TECHNOLOGIES INC., Midland MI 48674 (US)
(72) Inventor: JENKINES, Randall, C., Dalton, GA 30720 (US); FIEST, Jack, R., Dalton, GA 30721 (US); MASHBURN, Larry, E., Rocky Face, GA 30740 (US); HARRISON, William, H., Dalton, GA 30720 (US)
(74) Representative: Weickmann, Heinrich
(86) International application number: PCT/US2003/032390
(87) International publication number: WO 2004/035910

(56) References cited:
- EP-A- 0 595 063
- EP-A- 0 891 848
- WO-A-98/25984
- DE-A- 4 224 702
- DATABASE WPI Section Ch, Week 198548 Derwent Publications Ltd., London, GB; Class A95, AN 1985-299683 XP002269702 & JP 60 206868 A (HIGH SEAT KOGYO KK), 18 October 1985 (1985-10-18)

## Description

The invention relates to the process of producing a carpet backing using recycled carpet scrap.

A tufted carpet is typically composed of several different materials and is made by tufting fibrous pile material into a primary backing. The resulting greige goods are typically backed with an adhesive coating in order to secure the face fiber to the primary backing. Such type of carpeting is referred to as a unitary backed carpet and is widely used in motorized vehicles, such as cars, trucks and boats. In addition, they are used in outdoor venues, such as patios, as well as indoor commercial settings, such as schools. Typically, the adhesive coating is a latex composed of carboxylated styrene/butadiene copolymer or ethylene vinyl acetate copolymer.

Primary backings for tufted pile carpets are typically woven or non-woven fabrics made of one or more natural or synthetic fibers or yarns, such as jute, wool, polypropylene, polyethylene, polyamides, polyesters, polyurethanes and rayon. Ribbon shaped films of synthetic materials, such as polypropylene, polyethylene and ethylene-propylene copolymers may also be used to form the woven primary backing. PolyBac™ from British Petroleum is an example of a woven polypropylene primary backing.

Other types of carpet typically contain a secondary backing. The secondary backing is bonded to the undersurface of the primary backing using any of several types of adhesive coatings. These can include foams and essentially non-cellular materials. Secondary backings for tufted pile carpets are also typically woven or non-woven fabrics made of one or more natural or synthetic fibers or yam. Preferably, secondary backings for tufted pile carpets are open weave or leno weave, that is, tape yarn in the warp direction and spun staple fiber in the fill direction. The spun staple fiber is more costly but desirable to increase adhesion between the backing and the adhesive coating. ActionBac™, a product of British Petroleum, is an example of a woven polypropylene secondary backing. A non-woven needled punch fabric can also be used as a secondary backing. Typically these are made from short polyester fibers that are needled punch to form a continuous sheet material. Carpets containing a primary backing and a secondary backing are more typically used in automotive vehicles as well as in residential dwellings, commercial buildings or as area rugs in similar settings.

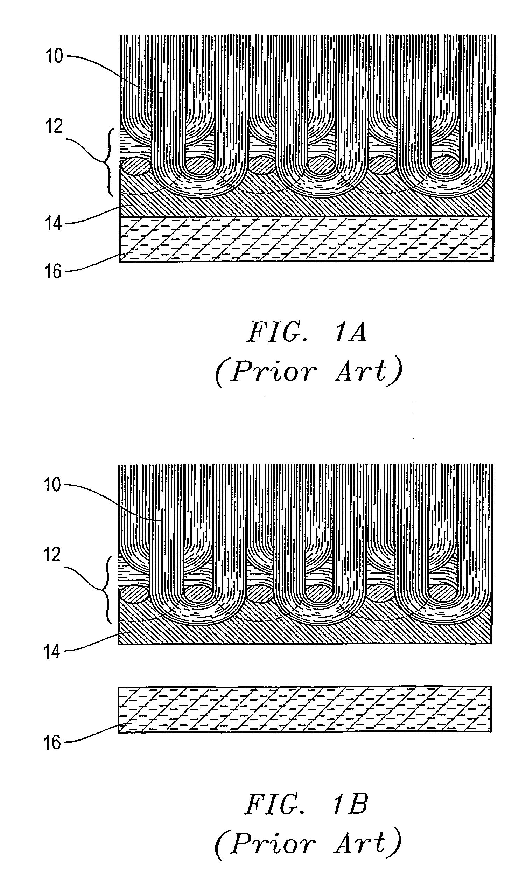

As set forth in FIGs. 1A and 1B, carpets containing a primary backing and a secondary backing are more typically characterized as being "attached" or "unattached". Referring to FIG. 1A, tufted carpet pile 10 forms loops through primary backing substrate 12 and extends upwardly therefrom. Pile yarns may further be cut to form cut pile tufts, not illustrated.

Precoat or backcoat 14 is an adhesive coating that fixes the tufted carpet pile yarns in place in primary backing 12. The composite of carpet tuft, primary backing and precoat is often referred to as a "unitary carpet backing". Precoats or backcoats are typically composed of water based chemistries, such as resinous emulsions or dispersions, polyurethane reactive mixture and thermoplastic or hot melts. Precoat or backcoat 14 may, optionally, be at least partially heat cured in order to lock tufted carpet pile 10 to primary backing 12. This is especially preferred when the precoat or backcoat is a foam. Heat curing or drying is generally desirable where the precoat or backcoat is made from reactive or water based chemistries. Precoats or backcoats made using thermoplastic polymers or hot melts are typically cured by allowing them to cool to room temperature.

In a subsequent step, secondary backing 16 is coated directly onto partially cured backcoat or precoat 14 to render a monolithic carpet system. The composite is then hardened. Commonly, the composite is heat cured by use of a suitable heat source such as an infrared oven, a convection oven, or heating plates. A temperature of from 100° C to 170° C, and a time of from 1 minute to 60 minutes is typically suitable for curing the system. When the secondary backing coating is a hot melt laminate, the secondary back coating is hardened by simply allowing it to cool.

In an "unattached" backing, illustrated in FIG. 1B, secondary backing 16 is manufactured in a separate process and is then adhered to precoated carpet fabric 14 with an adhesive system, such as spray-on, hot melt film, etc. Alternatively, the precoated carpet fabric may be stretched over secondary backing 16 during final installation.

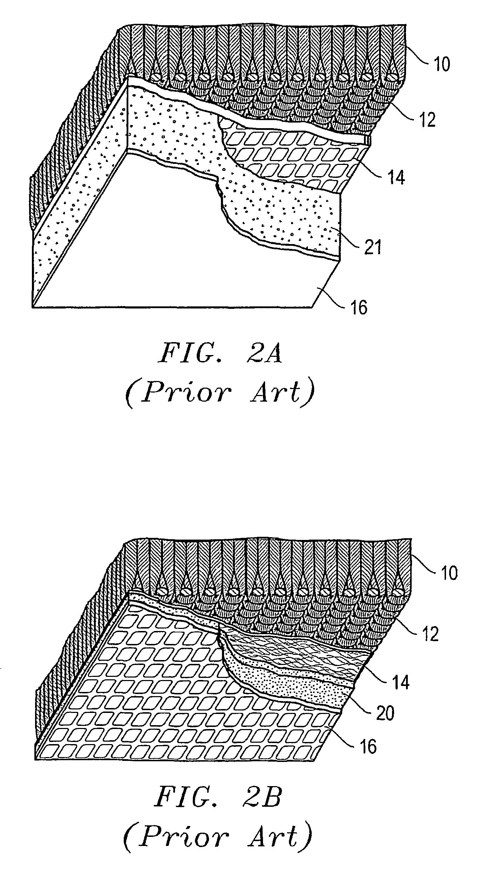

In "cushioned" laminates, typically in high quality commercial carpeting, the secondary backing further functions as a cushioning or padding. As illustrated in FIG. 2A, a froth or foam coating 21, having a density typically ranging from 48 to 480 gm/L, is applied onto precoat or backcoat 14. Secondary backing 16 is then applied. Upon curing, the froth or foam coating is transformed into a cushion or pad. Since such cushioned laminates contain foam (or padding), an independent foam or pad is not required to be overlaid prior to installation.

A cushioned laminate may be attached or unattached. In an unattached cushioned laminate, secondary backing 16 and foam 21 are manufactured in separate process steps. They are then adhered to the unitary carpet backing, defined as the combination of 10, 13 and 14, with a laminate coating by conventional techniques, such as application as a spray or a hot melt film, etc. In residential installation, the laminate coating is often stretched over the foam onto pins. In commercial applications, the laminate is doubled glued, that is, the foam is first glued to the floor and the laminate coating is then glued to the foam. If no foam is used, the laminate is glued directly onto the floor. Use of a precoat may be unnecessary by applying a sufficient amount of a laminate coating, such that the laminate coat soaks into the carpet weave and performs the function of both precoat and laminate coat. Similarly, a foam coat can be applied in an amount sufficient to eliminate separate application of a precoat and/or laminate coat.

In contrast to "cushioned" laminates, FIG. 2B exemplifies an "uncushioned" laminate. An "uncushioned" laminate may contain a unitary carpet backing coated with secondary adhesive 20 which is secured to secondary backing 16. Most residential carpets are "uncushioned" laminates wherein the secondary backing 16 is generally polypropylene or jute or other fabric and secondary adhesive 20 is often referred to as a "skip coating" or "laminate coating" or both. The skip coating functions to adhere to secondary backing 16 with the unitary carpet backing (defined by the combination of 10, 12 and 14). Foam padding can be laid underneath such uncushioned laminates (as well as unitary carpet backings) at the site of installation. The carpet can be stretched over the foam padding or glued to the foam padding during installation. The manufacturing process for water based emulsion systems usually involves wet on wet processing of the precoat and/or laminate coating and/or skip coating followed by heat curing. Wet on wet processing refers to the technique of applying one coat onto a substrate and applying a second coat onto the first coat. Curing after the last coating is desired. In contrast to wet on wet processing is wet on dry processing. The latter refers to the application of a first coating as a liquid, at least partially curing the first coating and then applying a second coating onto the at least partially cured first layer. Wet on dry processing is usually used in the production of foams.

More recently the industry has seen the advent of cushioned back carpet tiles. Such products typically employ a foam base composite adhesively bonded by adhesive laminate layers. The primary carpet fabric contains cut pile yarns implanted in a polymer such as polyvinyl chloride, latex or hot melt adhesives having a woven or nonwoven reinforcement or substrate layer of fiberglass, nylon, polypropylene or polyesters. See, for instance, U.S. Patent No. 4,522,857 as well as U.S. Patent No. 5,540,968.

The adhesives or binders typically used in carpets include polyurethane reactive mixtures (especially in froth or foam coating compositions), as well as dispersions or emulsions containing synthetic or natural resins, polyesters or polyurethanes. In addition, bituminous compositions as well as thermoplastics such as polypropylene, polyethylene, and ethylene vinyl acetate hot melts have also been used.

Suitable as emulsions are those of an ethylene vinyl acetate copolymer, styrene butadiene copolymer, styrene vinylidene chloride copolymer, styrene-vinylidene chloride-butadiene copolymer, polyisoprene, styrene acrylate copolymer, styrene (meth)acrylate copolymer, polyvinyl chloride, polyvinylidene chloride, ethylene acrylic acid copolymer, or ethylene (meth)acrylic acid copolymer. In addition, the adhesive or binder may be a natural rubber latex.

All types of carpeting present concerns to the environment especially in urban areas where safely situated landfills and disposal areas are filled to capacity or fastly approaching capacity levels. The industry has focused efforts on recycling spent carpet in light of such environmental concerns. Recycling carpeting materials is especially desirable in light of the large amount of scrap material generated during manufacture as well as the ever-increasing volume of spent carpeting which is being discarded.

Recycling is inviting because it avoids the problems with landfills and incineration. Unfortunately, recycling efforts have been made complicated by the fact that carpets are fabricated from a multitude of synthetic and natural resins used as adhesives, reinforcement materials and fibrous pile materials which are often incompatible with each other in recycling operations.

Exemplary of the prior art relating to recycling of carpet scrap materials is German Unexamined Patent Application DE 38 16894 A1 which discloses a process of making rod or plate shaped structural elements for building construction and structural work from textile carpet waste materials by shredding the textile carpet waste material, comminuting the shredded material and then surface melting the comminuted fragments. The resulting porous granulates having a fibrous structure which is then treated with a polyol and polyisocyanate. The resulting mixture is then compressed and the compressed article exposed to heat wherein the polyurethane is cured. Unfortunately, this process does not render a higher percentile of conversion of carpet scrap into recycled backing coating and thus is uneconomical.

U.S. Patent No. 6,228,479 discloses a process for recycling waste thermoplastic materials including aliphatic polyamides, polyethylene, polypropylene, polyvinyl chloride and polyvinyl acetate wherein the waste polymeric material includes from 15 to 50 percent aliphatic polyamide material. The process consists of granulating the mixture into fragments and then extruding the granulated mixture at a temperature less than the temperature at which the largest portion of waste aliphatic polyamide material decomposes. Unfortunately, this process is useful in only limited applications.

WO-A-9825984 describes a method for making a carpet backing by adding a polyurethane reactive mixture to a carpet scrap material filler.

In summary, the processes of recycling or reclaiming carpet scrap materials of the prior art have been unsuccessful; principally because such processes are economically infeasible and further because such processes have limited applicability.

Thus, it is among the objects of the invention to provide a process of recycling, reclaiming, and re-utilizing carpet scrap materials.

Further the present application discloses a new floor covering which contains recycled and reclaimed carpet scrap material.

Carpet backing may be prepared from recycled carpet scrap by the novel process of the invention. Such carpet scrap may be either residential, recreational, or commercial grade business carpet or area rugs.

In the method of the invention, carpet scrap is first comminuted into fragments. The carpet waste fragments are then melted and fused together to render molten fragments. The resulting molten fragments are then formed into agglomerates which are then ground into a fine powder. Recycled carpet backing is then prepared by introducing the fine ground powder to a virgin carpet backing formulation. Such "carpet backing formulation" may include either a precoat, laminate coating, skip coating or foam coating. The resulting product may then be coated onto a substrate where it is hardened by either being cured or dried. The method of the invention may be run either batch or continuous.

The invention offers several benefits over the processes and products of the prior art. Foremost, the process of the invention has an environmental benefit since it reduces or eliminates the dumping of carpet scrap materials into landfills. Second, the process of the invention reduces the cost of producing carpets because it uses worthless carpet scrap materials. Lastly, the process of the invention provides flexibility to the carpet manufacturer since it is applicable and can be used to recycle and produce any type of carpet backing.

In order to more fully understand the drawings referred to herein, a brief description of each drawing is presented, in which:
FIGS. 1(A) and 1(B) show the distinction between an attached carpet back [FIG. 1(A)] and an unattached carpet backing [FIG. 1(B)].
FIGS. 2A and 2B exemplify a cushioned laminate and uncushioned laminate, respectively.
FIG. 3 is a block flow diagram of the process of the invention.
FIG. 4 is a schematic for processing carpet powder with a reactive polyurethane precoat coating.
FIG. 5 exemplifies the processing of scrap carpet into ground powder with an emulsion of virgin carpet backing formulation.
FIG. 6 represents an embodiment of the invention wherein the ground powder may be separated in a sieve separator.
FIG. 7 is a flow diagram illustrating a process wherein the virgin carpet backing formulation is an aqueous emulsion compound.
FIG. 8 is a flow diagram illustrating a process where the virgin carpet backing formulation is a thermoplastic material.

The invention relates to a method of making a carpet backing from carpet scrap comprising:
(A.) obtaining carpet scrap having a substrate and a backing coating secured to the substrate;
(B.) shredding the carpet scrap into fragments;
(C.) melt-mixing the shredded carpet scrap fragments;
(D.) forming agglomerates from the molten carpet scrap fragments;
(E.) grinding the agglomerates into a powder, and
(F.) forming a recycled backing coating comprising the ground powder.

The recycled backing coating of Step (F.) comprises the ground powder of Step (E.) and a polyurethane reactive mixture. The backing coating of Step (F.) may further contain at least one additive selected from the group consisting of flame retardants, foaming agents, foam stabilizers, surfactants, catalyst, frothing agents, water softeners, dispersing agents, thickeners, defoamers, pigments, anti-microbial agents, stain resistant agents, fillers, waxes, soaps, or water barrier additives. The carpet scrap may be greige, an uncushioned laminate, a unitary carpet backing, an attached cushioned carpet backing, a cushioned back carpet tile, a hard backed carpet tile, spent residential grade carpet, spent commercial grade carpet or a spent area rug.

In the first step of the process of the invention, carpet scrap is shredded into smaller fragments. As used herein, "carpet scrap" refers to any tufted carpet, either attached or unattached, cushioned or uncushioned, as well as any carpet backing, such as primary backing and secondary backing. It shall include greige as well as carpet containing any carpet backing. Included with the definition of "carpet scrap" is defective or unusable remnants of finished carpet such as those portions obtained as edge strips or end pieces from finished carpet trimmed from lateral edges. Further, it refers to whole carpet, that is, carpet which has not been previously subjected to mechanical or chemical separation, as well as "beneficiated carpet", that is, carpet components that are a product of separation of whole carpet. Such beneficiated or unbeneficiated carpet includes that which has been or is intended discarded by a consumer, manufacturer, distributor, retailer, installer. Further, the term includes carpet squares and tiles as well as undersurface foam padding or cushioning, regardless if it is incorporated into a cushioned or uncushioned laminate or serves as a distinct floor pad. In addition, "carpet scrap" encompasses commercial grade as well as residential carpet as well as carpet used outside of the home, or office, such as carpeting used in an automobile, outdoor and indoor patios, marine boating, etc. Carpet types referred to herein are exemplary of carpets processable according to the present invention. It will be appreciated by those skilled in the art that other types of carpeting may also be processed according to the present invention.

Carpet scraps typically include any one of a multitude of synthetic or natural resins. Such resins may originate from the fiber tuft per se, such as nylon, polyamide (most commonly nylon 6 or nylon 66), polyester fibers, ethylene acetate copolymer, polyethylene, polypropylene, polyurethane fibers or wool.

In addition, resins and other chemical species may originate from carpet backing. As used herein, "carpet backing" shall further refer to any layer applied to a substrate during the manufacture of carpet. It shall include, but not be limited to, any adhesive or binder coating which serves to adhere a tuft carpeted onto a substrate. Exemplary of a carpet backing are precoats, back coats, laminate coats, skip coats, secondary coatings, as well as froth or foam coatings or fibermat.

The carpet backing may be comprised of any chemical material recognized in the art for forming an adhesive or binding coating for use in an integral composite containing tufted carpet or for use with tufted carpet.

Typically, the carpet backing is derived from an emulsion polymerization product, polymeric reactive mixture (such as a polyurethane reactive mixture) or a thermoplastic polymer. In the present invention, the carpet backing formulation refers to a polymeric reactive mixture.

The carpet backing is one that hardens on the textile substrate by heating or drying (typically true for emulsion polymers) or cooling (typically true for thermoplastic materials) or in any way reacting the carpet backing so as to cure, crosslink or bind it to the substrate (typically true for polymeric reactive mixtures).

An exemplary emulsion polymerization product includes ethylene vinyl acetate copolymer, styrene butadiene copolymer, carboxylated styrene butadiene latex, styrene vinylidene chloride copolymer, styrene-vinylidene chloride-butadiene copolymer, polyisoprene, styrene isoprene latex, styrene acrylate copolymer, styrene (meth)acrylate copolymer, polyvinyl chloride, polyvinylidene chloride or an ethylene vinyl copolymer with at least one acrylic monomer such as, for example, acrylic acid, methacrylic acid, or esters of such acids. Other conventional polymerization products include polyurethane dispersions as well as natural rubber latex.

Suitable thermoplastic polymers for use as carpet backings include bitumen, ethylene vinyl acetate, polyvinyl chloride, polypropylene or polyethylene.

Exemplary of polymeric reactive mixtures for use as carpet backings are those derived from a polyol containing component and a polyisocyanate containing component.

In addition, the carpet backing formulation may contain a filler such as barium sulfate, calcium carbonate, clay, coal ash or hydrated alumina fillers.

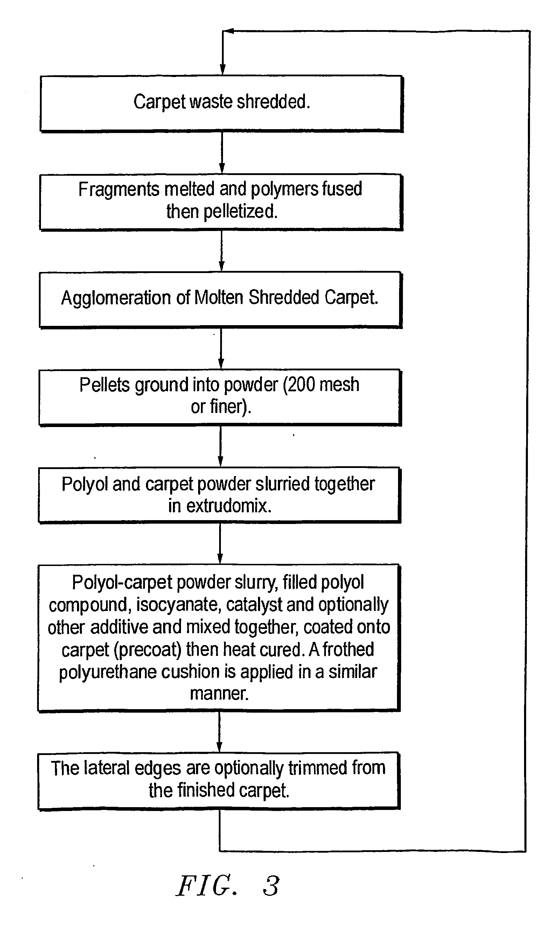

The process of the invention can be conducted batchwise or continuous. FIG. 3 schematically represents an embodiment of the invention wherein, in the first step of the process, carpet scrap is delivered to shredder or chopper. In the shredder, the carpet waste is comminuted into fragments. Preferably, the carpet waste is comminuted into fragments of approximately 3,23-19,35 cm² (0.5 to 3 square inches), most preferably 6,45 cm² (one square inch). The shredder may be any conventional shredder or chopper that is capable of fragmenting the textile carpet waste material into the desired size. A suitable shredder is Model CT-60 available from Pieret, Inc. Alternatively, the carpet scrap may be cut into larger pieces in a first shredder or chopper and then introduced into a mill or granulator which breaks down or cuts up the fragmented carpet residues to the desired size.

The shredded carpet fragments are then transferred to a chamber wherein the fragments are melted and fused together. This step must occur at temperatures, pressures and mixing conditions sufficient to melt the fragmented carpet waste fragments and fuse them together. Typically, the pressure is between from 2,4-3,1 N/mm² (350 to 450 psi), the temperature is between from 120° C to 270° C, preferably 150° C to 220° C. The processing time is usually less than 10 seconds.

In a preferred embodiment, the fragmented shredded carpet waste fragments are transported to an extruder with a temperature sufficient to melt and pelletize the fragments. The molten fragments, upon cooling, are fused together to create molten fragments. Such fragments contain synthetic resins which originate from the pre-shredded carpet scrap. A suitable extruder is Model 2DS-K 57M32 or ZSK-170 M 1750 10 G, both available from Werner & Pfleiderer. The materials are passed through extruder barrel including a degassing zone and then through a pumping zone which forces the same through a die. The pumping zone functions to develop sufficient through-put without creating intolerable back pressures in the preceding zones or on the thrust bearings of the extruder. The extruder is operated at a temperature of 150° to 270°, preferably 170° to 250°, most preferably 215° C. The screw in extruder at first compresses the mixture at room temperature. Apparatus other than an extruder may be used for melt mixing provided the process parameters are sufficient to produce molten materials from the shredded carpet waste fragments.

The resulting molten fragments are then formed into agglomerates, typically cylindrical shaped agglomerates. In a preferred embodiment, the components of the molten shredded carpet are not separated prior to agglomeration.

Agglomeration may occur in the same apparatus wherein the melt mixing is conducted. Extruders suitable for conducting melt-mixing and agglomeration of the molten fragments include the CVSO Condux Plastocompactor manufactured by NETZSCH-CONDUX Mahltechnik GmbH wherein shredded carpet waste fragments are conveyed into the center of two flat cone-shaped discs by a variable speed screw feeder. The material is sintered by frictional heat between the rotating and stationary discs. The material passes quickly through the compression section in seconds, limiting the exposure to temperature. The resulting agglomerates, which typically are cylindrically shaped, preferably have a cross sectional area from 0.8 cm X 5.0 cm to 0.7 cm X 4.0 cm, most preferably 0.6 X 3.0 cm to 0.5 cm X 2.0 cm. The process temperature may be controlled by cooling water or a cold-air stream in both the rotating and stationary discs. The temperature in the extruder is adjusted such that the fragments are softened but not totally melted during compaction. Typically, the extruder is operated such that a temperature between from 150° C to 220° C is maintained. Immediately after compaction, the agglomerates on the outer circumference of discs are spun off and conveyed, preferably in a cold-air stream, to cutting granulator. The sintered product may be cut into a free-flowing agglomerated material.

The resulting agglomerates are then granulated to form a powder. Formation of the powder may be effectuated by using a Model 2442 RS 24" X 42" Cutting Chamber from Rapid Granulator. Typically, the particles of the ground powder have a size of less than or equal to 0,074 mm (200 mesh). In an alternative embodiment, the ground powder may be delivered to a vibrating sieve separator where those particulates having a size greater than 0,074 mm (200 mesh) are separated out of the ground mixture and then subjected to further granulation.

The ground powder of the desired particle size is introduced into any one of a number of flowpaths. The resulting product is termed a "recycled carpet backing" because it contains ground carpet scrap as well as virgin (unadulterated) carpet backing formulation. The virgin carpet backing formulation is preferably either (i.) a carpet backing formulation applied directly onto the textile substrate or (ii.) a polymeric reactive mixture for a carpet backing formulation.

Where the carpet backing formulation is to be a reactive polyurethane mixture, the ground powder may be introduced into either of the polymeric reactive mixtures, that is, either the polyisocyanate stream or preferable a polyol stream. Introduction of the ground powder to a polymeric reactive mixture can occur at two desirable stages. Specifically, the ground powder can be introduced into either of the two component systems - the, optionally filled, polyol stream and a polyisocyanate stream. Introduction of the ground powder to either stream results in the formation of a slurry containing the polyol or polyisocyanate stream with filler. The slurry is introduced to a blender containing the filled polyol stream, the polyisocyanate stream, the catalyst stream, and optionally other additive streams. The weight ratio of ground powder to polyol in the slurry is between from 50 to 80, preferably from 25 to 50, weight percent. The slurry is then introduced to the other components of the formulation. The resulting product, for instance a precoat, is then coated onto a textile substrate.

The weight ratio of polyisocyanate to the filled polyol in the virgin polymeric reactive mixture is generally between from 0.1:1 to 0.4:1, preferably between from 0.14:1 to 0.3:1. The coated substrate is then heat cured. Suitable polyols for the polymeric reactive mixture typically have an average equivalent weight of from 500 to 5,000, preferably from 750 to 2,500, and more preferably from 750 to 2,000. Polymers of propylene oxide which are at least partially end-capped with ethylene oxide are preferred as the polyol for mechanically frothed foam systems. The stream containing the filled polyol may optionally include additional active hydrogen containing material. The identity of a polyisocyanate used in the present invention is not critical. The polyisocyanate can be aliphatic or aromatic. Aromatic polyisocyanates suitable for use herein include, for example: phenyl diisocyanate; 2,4-toluene diisocyanate; 2,6-toluene diisocyanate; ditoluene diisocyanate; naphthalene 1,4-diisocyanate; 2,4'- and/or 4,4'-diphenylmethane diisocyanate (MDI); polymethylene polyphenylenepolyisocyanates (polymeric MDI); like compounds, and mixtures thereof. Suitable aliphatic polyisocyanates include, for example: 1,6-hexamethylene diisocyanate; isophorone diisocyanate; 1,4-cyclohexyl diisocyanate; like compounds and mixtures thereof. Prepolymers prepared by reacting a polyol or chain extender with a polyisocyanate are suitable. A catalyst is often included with the polyol stream.

Where a polyurethane-forming froth is desired as carpet backing, the ground agglomerates are introduced into a polymeric reactive mixture along with an inert gas. Various methods for producing flexible foams are known in the art. See, for example, U.S. Patent No. 4,296,159, 4,853,054, and 5,104,693.

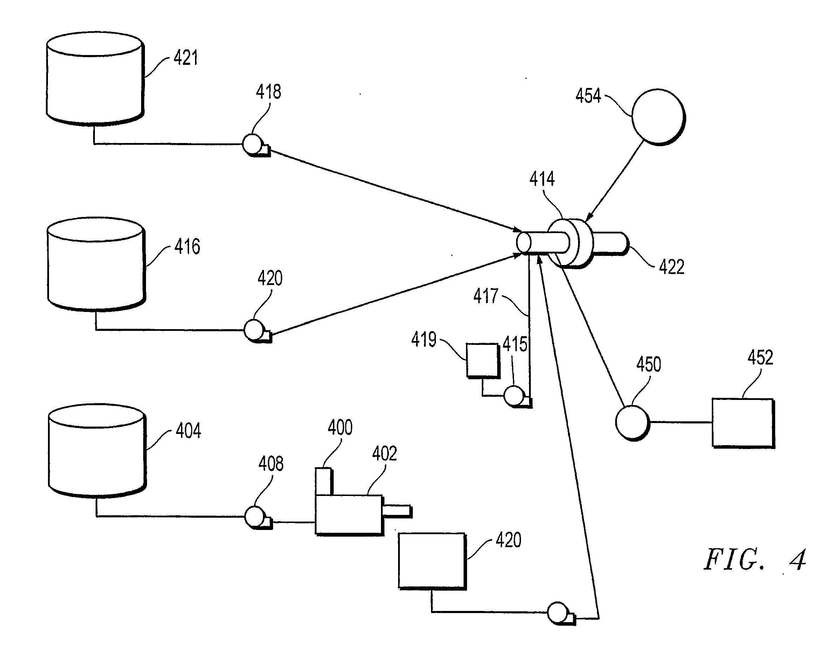

FIG. 4 illustrates a method for processing carpet powder into a reactive polyurethane precoat coating wherein filled polyol in storage 421 enters mixer 414 via pump 418; polyisocyanate in storage container 416 enters mixer 414 via pump 420; and catalyst 417 enters the mixer 414 from storage 419 via pump 415. Ground powder 400 is then admixed with polyol or polyisocyanate in mixer 402; the polyol and/or polyisocyanate entering the system from storage container 404 via pump 408. The mixture is in the form of a slurry and enters into the system at 420 where it advances into mixer 414. A stream of air or other inert gas 454 may be introduced into mixer 414 if a froth backing layer is desired. In this instance, mixer 414 is preferably a foamer mixer, such as the froth generator-mixer of an Oakes. Optionally other additives stored in container 452 may be introduced to mixer 414 via pump 450. The frothed composition 417 which emerges is then directed onto the targeted substrate at 422. The froth composition is allowed to thermoset into a flexible polyurethane precoat. Curing of the backing coating is preferably by heating or drying, typically in an oven for 4 to 6 minutes between 150 and 200° C.

These additives include surfactants, blowing or foaming agents, flame retardants, pigments, antistatic agents, reinforcing fibers, antioxidants, preservatives, water scavengers, acid scavengers, foam stabilizers, catalysts, softeners, dispersing agents, thickeners, defoamers, pigments, anti-microbial agents or stain resistant agents, waxes, soaps, water barrier additives. Such additives may further be introduced directly into mixer 414 containing the virgin carpet backing formulation. Or they may added to the filled polyol in 421. Preferred fillers include, for example, milled glass, calcium carbonate, aluminum trihydrate (ATH), talc, bentonite, antimony trioxide, kaolin or coal ash. The concentration of filler to be used, if any, can be determined by various factors, including the end-use application of the article, the cost of producing the article, the effect of the filler on the color, texture, or other physical properties of the article as well as process parameters. Where it is desired to use a filler, the filler may be loaded at concentrations up to 1000 parts of filler per 100 parts of the virgin carpet backing formulation on a dry parts to dry parts basis.

When a filler is desired to be used, a filler wetting agent may further be optionally employed. A wetting agent generally performs the function of compatibilizing the filler with the other components of the virgin carpet backing formulation. Useful filler wetting agents include ethoxylated phosphate esters in an organic carrier. Organosilane compounds and organotitanate compounds are suitable as well. When used, a wetting agent can be included in the recycled carpet backing at a concentration of at least 0.1 parts per 100 parts of filler, by weight.

Further suitable virgin carpet backing formulations, to which the ground powder is introduced, are polymer containing emulsions or dispersions. While the chemical differences between an emulsion and dispersion are recognized; the distinctions need not be recognized, however, for purposes of the invention. Emulsions and dispersions, both equally useful in the invention, are therefore collectively termed "emulsions" herein.

Suitable for use as the virgin carpet backing formulation are polyurethane dispersions or emulsions of an ethylene vinyl acetate copolymer, styrene butadiene copolymer, carboxylated styrene butadiene latex, styrene vinylidene chloride copolymer, styrene-vinylidene chloride-butadiene copolymer, polyisoprene, polystyrene, styrene isoprene latex, styrene acrylate copolymer, styrene (meth)acrylate copolymer, polyvinyl chloride, polyvinylidene chloride or an ethylene vinyl copolymer with at least one monomer such as acrylic acid, methacrylic acid, or esters of such acids, as well as natural rubber latex, or an aqueous polyurethane dispersion.

In addition, the virgin carpet backing formulation to which the ground powder may be introduced include thermoplastic materials such as bitumen, ethylene vinyl acetate hot melt, polyvinyl chloride, polypropylene and polyethylene. Such thermoplastic polymers are applied to the textile substrate by hot melt coating techniques known in the art. If the backing is composed of a hot melt, the carpet backing is hardened by cooling.

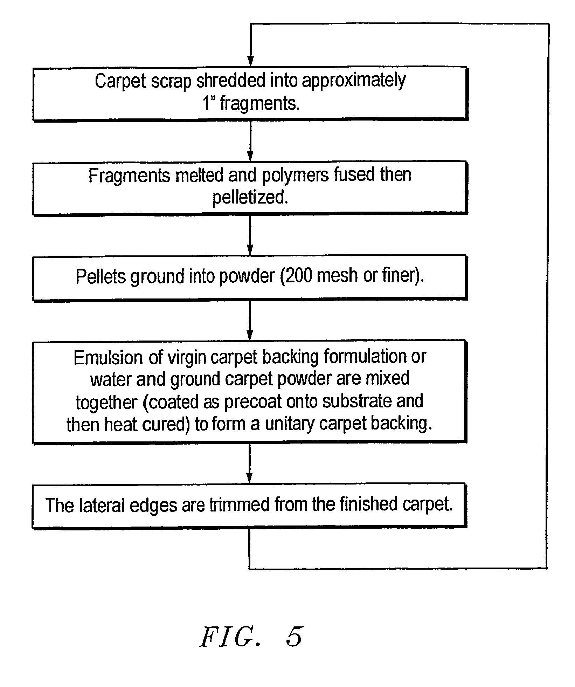

(FIG.5 illustrates a process wherein the virgin carpet backing formulation is an emulsion wherein, in the first step of the process, carpet scrap is delivered to shredder or chopper where it is comminuted into fragments of approximately 2,5 cm (one inch). The shredded carpet fragments are then transferred to a chamber wherein the fragments are melted and fused together. This step occurs at conditions sufficient to melt the fragmented carpet waste fragments and fuse them together. Immediately after the fragments are fused they are pelletized. The pelletization can occur in the same container as that wherein the fragments are melted and fused. The resulting molten pelletized fragments are then ground into a powder. To the ground powder is admixed with either an emulsion of virgin carpet backing formulation or water. The mixture is then coated as a precoat onto a substrate and cured by heating or drying, typically in an oven for 4 to 6 minutes between 150 and 200° C. Excess material trimmed from the finished carpet is recycled back into the chopper or shredder and the process is repeated.)

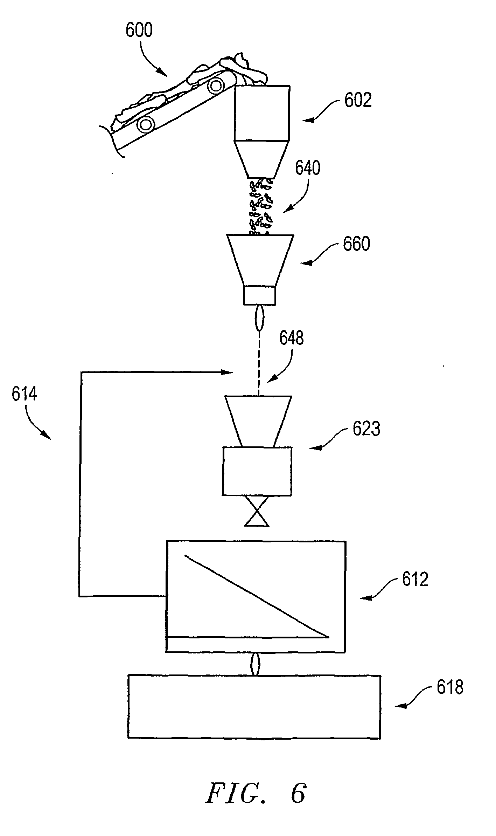

FIG. 6 exemplifies a continuous process of the invention having a recycle loop wherein the ground powder may be separated in vibrating sieve separator 612. The process begins with the shredding of carpet waste 600 into small fragments in chopper/shredder 602, approximately 2,5 cm (one inch). The carpet waste is generally composed of plastic materials like nylon 6 or 6,6, polypropylene, emulsion polymer like carboxylated styrene butadiene, polyurethane and/or polyester. The carpet waste fragments 640 are melted and are then fused together and then pelletized in an extruder, such as a Model CV50 Condux Plastcompactor, 660. Cylindrically shaped fragments 648 exiting the extruder are ground to a fine powder of approximately 0,074 mm (200 mesh) or finer in granulator 623. As the agglomerates exit granulator 623, they enter vibrating sieve separator 612. Particles greater than the desired size (typically those having a size of 0,074 mm or higher (mesh of 200 or higher)) are separated in sieve separator 612 and re-introduced into granulator 623 as stream 614. Particulates having a size of less than 0,074 mm (mesh size less than 200) are collected in container 618. Ground powder of the desired particle size are then used to form any one of several different carpet backings. These backings include a precoat, laminate coating, slip coating, or foam or froth coating or any adhesive or binder coating for manufactured carpet.

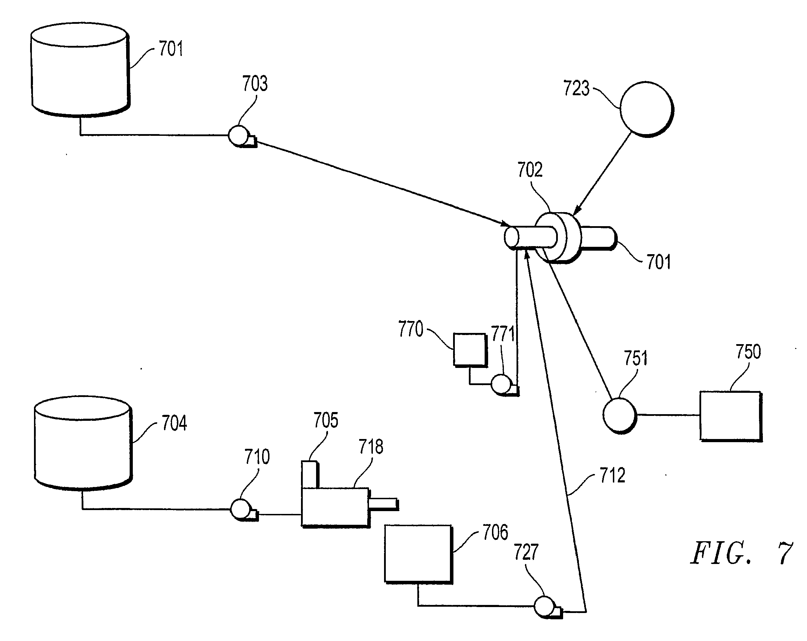

FIG. 7 is a flow diagram illustrating the process wherein the virgin carpet backing formulation is an aqueous emulsion compound. The aqueous emulsion containing compound is stored in container 701 and is introduced into mixer 702 via pump 703. The ground powder is introduced at 705 into mixer 718. A sufficient amount of emulsion or water to serve as carrier for the ground powder is stored in container 704. This emulsion or water may be the same or different from the emulsion in storage container 701. Introduction of the emulsion or water from container 704 with ground powder 705 in mixer 718 renders a slurry which is stored in tank 706. When desired, the slurry stored in tank 706 is introduced into mixer 702 as feedstream 712 via pump 727. When a froth is desired, the blowing agent stored in container 723 enters mixer 702 via inlet port 721. A mechanically frothed polyurethane cushion may also be applied in a similar manner. Additive container 750 is the depository for additives, if any, and are introduced into mixer 702 by pump 751. The resultant product is then delivered by traversing hose to the substrate puddles. The desired froth foam, precoat or laminate are doctored onto the substrate using various coating techniques.

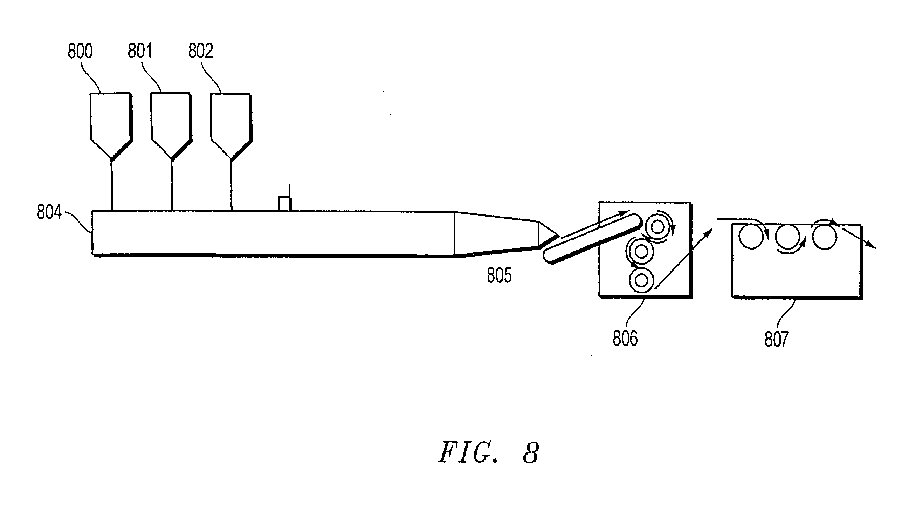

FIG. 8 is a flow diagram illustrating a process where the virgin carpet backing formulation is a thermoplastic material. Weight feeders 800, 801, and 802 feed thermoplastic polymer pellets, filler and carpet powder, respectively to extruder and kneading zones 804. The blended material passes through the pumping zone where it is degassed and then forced through die 805. The material is calendared 806 into a sheet and cooled at cooling zone 807. Once cooled the sheet can be rolled up in a roll up zone (not shown). The sheet can be further processed as a secondary backing by laminating it to carpet using a backcoating adhesive.

Where the resulting product is derived from an emulsion or reactive, the coated product is exposed to forced air heating. Generally, the heat is between from 4 to 6 minutes at between 150 and 200° C to affect a backing temperature of at least 105°C preferable 110°C as measure by an IR gun.

Where the virgin carpet backing formulation is composed of polyurethane reactive mixture or an aqueous emulsion, the ground powder is typically introduced to the carpet backing formulation as a slurry. The carpet powder can be also batched into the compound if desired.

The finished carpet may be separated from the lateral edges of the carpet which are trimmed and recirculated, as waste, into the shredder. Such trimming is more typical of residential carpet than other types of carpeting. The process is then repeated.

The carpet backing formulation may be provided to the substrate of the carpet by numerous methods including the use of a roll over flatbed or roll over roll processes, such as in a single unitary process or in series, as a tandem process. The carpet backing formulation is generally applied to the textile substrate by use of a pump through traversing hoses into puddles rolling on the carpet. The thickness of the backing coating is preferably uniform. With cushioned laminates, the backing coating is typically coated onto the substrate as a frothed polymer formulation. Typically the froth coating is applied to cured precoated carpet substrate cured, using equipment such as a knife over bedplate or preferably a knife over roll applicator. Alternatively, froth coating may be gauged onto a secondary fabric riding on a moving belt where the cured precoated carpet is dropped onto the uncured froth and then the total composite is cured using heated platens.

The following example will illustrate the practice of the present invention in a preferred embodiments. Other embodiments within the scope of the claims herein will be apparent to one skilled in the art from consideration of the specification and practice of the invention as disclosed herein. It is intended that the specification, together with the example, be considered exemplary only, with the scope of the invention being indicated by the claims which follow.

### EXAMPLES

The waste, previously used carpet back printed with THE EHHANCER™ Class 111 carpet backing was obtained. The carpet was composed of nylon 6,6, polypropylene, polyurethane, and polyester. The waste carpet was chopped into approximately 2,5 cm (1-inch) fragments using a Model 2442 RS 24" x 42" Cutting Chamber from Rapid Granulator. The fragments were then fused and agglomerated to approximately 1 cm (3/8 of an inch) using a Model CV50 Plastcompactor from Condux, Division of Netzch. The operating temperature in the extruder was approximately 150 to 200° C. The fused particles were then ground into a +80 mesh powder using the Model 2442 RS 24" x 42" Cutting Chamber. To a Hosokawa Bepex Model EM-6 Extrud-O-Mix operating at 480 rpm were simultaneously metered 1488g/minute of Voranol^{®} 9287 polyol (a registered trademark of The Dow Chemical Co.) and 372 g/minute of the ground carpet powder. The components were mixed in the Extrud-O-Mix to form slurry. The slurry exited the mixer into a receiver (pump) that delivered the material to an Oakes™ blender where it was mixed with 200 load Voranol 9690 (TM) compound (37.9kg/minutes), Isonate^{®} 7594 isocyanate (7.5 kg/minutes) (a registered trademark of The Dow Chemical Company) and 5wt percent UL6 in Voranol 9287 (TM) polyol (0.055 kg/minutes). The precoat containing recycled carpet powder was applied to a puddle rolling on the backside of the carpet via a traversing hose. The precoat was deposited into the carpet using a coating knife. The carpet and applied precoat were conveyed into a gas fire oven by chain-driven tenter pins and cured at 150°C for 4 minutes. The carpet precoat backing then progressed to a second application station where a mechanically frothed polyurethane cushion was applied using a knife over roll applicator. A woven 13 pic Actionbac(TM) (a trademark of British Petroleum) was laid into the froth and the composite was transported through a second curing range for a final cure. The carpet was then rolled onto a core and wrapped.

## Claims

1. A method of making a carpet backing from carpet scrap comprising:
(A.) obtaining carpet scrap having a substrate and a backing coating secured to the substrate, which backing coating is derived from a polyurethane reactive mixture;
(B.) shredding the carpet scrap into fragments; .
(C.) melt-mixing the shredded carpet scrap fragments at a pressure between from 2413.2 kPa to 3102.6 kPa (350 to 450 psi) and a temperature between from 120 °C to 220 °C;
(D.) forming agglomerates from the molten carpet scrap fragments;
(E.) grinding the agglomerates into a powder; and
(F.) forming a recycled backing coating comprising the ground powder,
wherein the recycled backing coating of Step (F.) comprises the ground powder of Step (E.) and a virgin carpet backing formulation comprising a polyurethane reactive mixture.

2. The method of Claim 1, wherein the polyurethane reactive mixture comprises a polyol containing component and a polyisocyanate containing component and further wherein the ground powder is part of the polyol containing component or the polyisocyanate containing component.

3. The method of Claim 1, wherein the shredded carpet scrap fragments in Step (C.) are sintered by frictional heat.

4. The method of Claim 1, wherein the shredded carpet scrap fragments in Step (C.) are melt mixed in an extruder.

5. The method of Claim 1, wherein the agglomerates are formed by pelletizing the molten carpet scrap fragments in an extruder.

6. The method of Claim 1, wherein the backing coating of Step (F.) is a precoat, a laminate coating, a skip coating, or a foam coating.

7. The method of Claim 1, wherein the carpet scrap in Step (B.) is shredded into fragments of 6,45 cm² (one square inch).

8. The method of Claim 1, wherein the particle size of the ground powder in Step (F.) forming the backing coating is less than or equal to 0.074 mm (200 mesh).

9. The method of Claim 1, wherein the backing coating of Step (F.) further contains at least one additive selected from the group consisting of flame retardants, foaming agents, foam stabilizers, surfactants, catalyst, frothing agents, water softeners, dispersing agents, thickeners, defoamers, pigments, anti-microbial agents, stain resistant agents, fillers, waxes, soaps, or water barrier additives.

10. The method of Claim 1, wherein the carpet scrap is greige, an uncushioned laminate, a unitary carpet backing, an attached cushioned carpet backing, a cushioned back carpet tile, a hard backed carpet tile, a spent residential grade carpet, a spent commercial grade carpet, or a spent area rug.

11. The method of Claim 1, wherein the process is conducted continuously.

12. The method of Claim 1, wherein the process is conducted batchwise.

## Patentansprüche

1. Verfahren zur Herstellung eines Teppichrückens aus Teppichabfall umfassend:
(A.) Erhalten von Teppichabfall mit einem Substrat und einer Rückenbeschichtung, die am Substrat befestigt ist, wobei die Rückenbeschichtung aus einer reaktiven Polyurethan-Mischung stammt;
(B.) Zerkleinern des Teppichabfalls in Fragmente;
(C.) Schmelzmischen der zerkleinerten Teppichabfall-Fragmente bei einem Druck zwischen von 2413,2 kPa bis 3102,6 kPa (350 bis 450 psi) und einer Temperatur zwischen von 120°C bis 220°C;
(D.) Bilden von Agglomeraten aus den geschmolzenen Teppichabfall-Fragmenten;
(E.) Mahlen der Agglomerate in ein Pulver; und
(F.) Bilden einer recycelten Rückenbeschichtung, umfassend das gemahlene Pulver,
wobei die recycelte Rückenbeschichtung aus Schritt (F.) das gemahlene Pulver aus Schritt (E.) und eine jungfräuliche Teppichrücken-Formulierung, umfassend eine reaktive Polyurethan-Mischung, umfasst.

2. Verfahren nach Anspruch 1, wobei die reaktive Polyurethan-Mischung einen Polyol-enthaltenden Bestandteil und einen Polyisocyanatenthaltenden Bestandteil umfasst und weiter, wobei das gemahlene Pulver Teil des Polyol-enthaltenden Bestandteils oder des Polyisocyanatenthaltenden Bestandteils ist.

3. Verfahren nach Anspruch 1, wobei die zerkleinerten Teppichabfall-Fragmente in Schritt (C.) durch Friktionswärme gesintert werden.

4. Verfahren nach Anspruch 1, wobei die zerkleinerten Teppichabfall-Fragmente in Schritt (C.) in einem Extruder schmelzgemischt werden.

5. Verfahren nach Anspruch 1, wobei die Agglomerate durch Pelletieren der geschmolzenen Teppichabfall-Fragmente in einem Extruder gebildet werden.

6. Verfahren nach Anspruch 1, wobei die Rückenbeschichtung aus Schritt (F.) eine Zwischenschicht, eine Laminatschicht, eine Skip-Schicht oder eine Schaumbeschichtung ist.

7. Verfahren nach Anspruch 1, wobei der Teppichabfall in Schritt (B.) in Fragmente von 6,45 cm² (ein Quadratzoll) zerkleinert wird.

8. Verfahren nach Anspruch 1, wobei die Partikelgröße des gemahlenen Pulvers in Schritt (F.), das die Rückenbeschichtung bildet, weniger als oder gleich zu 0,074 mm (200 mesh) ist.

9. Verfahren nach Anspruch 1, wobei die Rückenbeschichtung aus Schritt (F.) weiter mindestens ein Hilfsmittel enthält, das ausgewählt ist aus der Gruppe bestehend aus Brandschutzmittein, Schaumbildnern, Schaumstabilisatoren, Tensiden, Katalysator, Schäumern, Wasserenthärtungsmitteln, Dispergiermitteln, Verdickungsmitteln, Entschäumern, Pigmenten, anti-mikrobiellen Mitteln, schmutzabweisenden Mitteln, Füllmitteln, Wachsen, Seifen oder Wassersperren-Hilfsmitteln.

10. Verfahren nach Anspruch 1, wobei der Teppichabfall Rohware, ein ungepolstertes Laminat, ein einheitlicher Teppichrücken, ein befestigter gepolsterterTeppichrücken, eine Teppichfliese mit gepolstertem Rücken, eine Teppichfliese mit hartem Rücken, ein abgenutzter haushaltsüblicher Teppich, ein abgenutzter handelsüblicher Teppich oder ein abgenutzter Webteppich ist.

11. Verfahren nach Anspruch 1, wobei das Verfahren fortlaufend ausgeführt wird.

12. Verfahren nach Anspruch 1, wobei das Verfahren chargenweise ausgeführt wird.

## Revendications

1. Procédé de fabrication de dos de tapis à partir de rebuts de tapis, lequel procédé comporte les étapes suivantes :
A) prendre des rebuts de tapis comportant un substrat et un revêtement de dos attaché solidement au substrat, lequel revêtement de dos est dérivé d'un mélange réactif pour polyuréthane ;
B) déchiqueter les rebuts de tapis pour les réduire en morceaux ;
C) faire fondre et brasser ces morceaux de rebuts de tapis déchiquetés, sous une pression de 2413,2 à 3102,6 kPa (350 à 450 psi) et à une température de 120 à 220 °C ;
D) former des agglomérats à partir de la masse fondue de morceaux de rebuts de tapis ;
E) moudre ces agglomérats pour en faire une poudre ;
F) et façonner un revêtement de dos recyclé, comprenant cette poudre mouture ;
et dans lequel procédé le revêtement de dos recyclé de l'étape (F) comporte la poudre mouture obtenue lors de l'étape (E) et une formulation vierge de dos de tapis comprenant un mélange réactif pour polyuréthane.

2. Procédé conforme à la revendication 1, dans lequel le mélange réactif pour polyuréthane comprend un composant contenant un polyol et un composant contenant un polyisocyanate, et en outre, la poudre mouture fait partie du composant contenant un polyol ou du composant contenant un polyisocyanate.

3. Procédé conforme à la revendication 1, dans lequel, dans l'étape (C), les morceaux de rebuts de tapis déchiquetés sont frittés par chauffage et frottement.

4. Procédé conforme à la revendication 1, dans lequel, dans l'étape (C), les morceaux de rebuts de tapis déchiquetés sont fondus et malaxés dans une extrudeuse.

5. Procédé conforme à la revendication 1, dans lequel on forme les agglomérats en transformant en pastilles, au moyen d'une extrudeuse, la masse fondue de morceaux de rebuts de tapis.

6. Procédé conforme à la revendication 1, dans lequel le revêtement de dos de l'étape (F) est une sous-couche, un revêtement stratifié, un revêtement discontinu, ou un revêtement de mousse.

7. Procédé conforme à la revendication 1, dans lequel, dans l'étape (B), les rebuts de tapis sont déchiquetés en morceaux de 6,45 cm² (1 pouce carré).

8. Procédé conforme à la revendication 1, dans lequel la taille des particules de la poudre mouture avec laquelle, dans l'étape (F), on façonne le revêtement de dos est inférieure ou égale à 0,074 mm (200 mesh).

9. Procédé conforme à la revendication 1, dans lequel le revêtement de dos obtenu dans l'étape (F) contient en outre au moins un adjuvant choisi dans l'ensemble formé par les agents ignifugeants, agents d'expansion en mousse, agents de stabilisation de mousse, tensioactifs, catalyseurs, agents moussants, agents d'adoucissement de l'eau, dispersants, épaississants, agents de démoussage, pigments, agents anti-microbiens, agents anti-taches, charges, cires, savons, et agents hydrofuges.

10. Procédé conforme à la revendication 1, dans lequel les rebuts de tapis proviennent d'un tapis non fini, d'un stratifié non rembourré, d'un dos de tapis d'un seul tenant, d'un dos de tapis rembourré attaché, d'un carré de tapis à dos rembourré, d'un carré de tapis à dos dur, d'un tapis d'habitation usagé, d'un tapis de bureau usagé, ou d'une carpette usagée.

11. Procédé conforme à la revendication 1, réalisé en continu.

12. Procédé conforme à la revendication 1, réalisé en discontinu.
